(19) Europäisches Patentamt
European Patent Office
Office européen des brevets

(11) Veröffentlichungsnummer: **0 423 674 B1**

# (12) EUROPÄISCHE PATENTSCHRIFT

(45) Veröffentlichungstag der Patentschrift: **21.09.94**

(51) Int. Cl.[5]: **B27K 3/50**

(21) Anmeldenummer: **90119728.5**

(22) Anmeldetag: **15.10.90**

## (54) Polymere Stickstoffverbindungen enthaltende Holzschutzmittel.

(30) Priorität: **20.10.89 DE 3934935**

(43) Veröffentlichungstag der Anmeldung:
**24.04.91 Patentblatt 91/17**

(45) Bekanntmachung des Hinweises auf die Patenterteilung:
**21.09.94 Patentblatt 94/38**

(84) Benannte Vertragsstaaten:
**AT BE CH DE DK ES FR GB GR IT LI NL SE**

(56) Entgegenhaltungen:
**DE-B- 1 160 140**
**FR-A- 2 263 083**

**JAPANESE PATENTS GAZETTE, Woche 8825, 3. August 1988, Sektion Ch: Chemical, Klasse F, Zusammenfassung Nr. 88-171459/25, Derwent Publications Ltd, London, GB; & JP-A-63 109 002**

(73) Patentinhaber: **Dr. Wolman GmbH**
**Dr.-Wolman-Strasse 31-33**
**D-76547 Sinzheim (DE)**

(72) Erfinder: **Goettsche, Reimer, Dr.**
**Waldstrasse 27**
**W-7570 Baden-Baden 19 (DE)**
Erfinder: **Reuther, Wolfgang, Dr.**
**Am Pferchelhang 16**
**W-6900 Heidelberg (DE)**

(74) Vertreter: **Karau, Wolfgang, Dr. et al**
**BASF Aktiengesellschaft,**
**Patentabteilung ZDX - C 6**
**D-67056 Ludwigshafen (DE)**

EP 0 423 674 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wasserlösliche Holzschutzmittel, die ein Metallsalz einer N-Organyldiazeniumdioxy-Verbindung und ein polymeres Amin enthalten.

Wasserlösliche Holzschutzmittel auf der Basis von komplexbildenden Aminen und Bis-(N-Cyclohexyldiazeniumdioxy)-Kupfer (Cu-HDO, frühere Bezeichnung N-Nitroso-cyclohexylhydroxylamin-Kupfer-Salz) sind bekannt (DE 2 410 603.4 und EP 234 461).

Als Amine sind z.B. Ethylendiamin, Diethylentriamin, Dipropylentriamin bekannt. Bei der Imprägnierung von Holz im großtechnischen Verfahren, dem Kesseldruckverfahren, ist die Eindringtiefe und die Verteilung des Cu-HDO im Holz nicht ausreichend, um den Holzschutz, z.B. bei Rundhölzern wie Masten oder Palisaden, insbesondere bei Verwendung mit Erdkontakt, z.B. als Telegrafenmasten, auf Dauer zu gewährleisten. Die alkalischen wäßrigen Lösungen des komplexierten Cu-HDO (pH-Wert ca. 9 bis 10) reagieren mit den sauren Holzbestandteilen bereits während der Imprägnierung in der Weise, daß das Cu-HDO bei Berührung mit dem Holz ausfällt und die Lösung dadurch nicht tief in das Holz eindringt.

Behandlungsmittel auf der Grundlage wäßriger Mischungen von Bis-(N-Cyclohexyldiazeniumdioxy)-Kupfer, Polyaminen (Di- oder Triamin, wie Ethylendiamin, Diethylentriamin) und komplexbildenden Carbonsäuren (EP 234 461) dringen zwar gut in Rundhölzer ein, ihre Kupferfixierung ist jedoch nicht ausreichend; es werden 12 bis 20 % des Kupfers bei Normalfixierung (20 °C/4 Wochen) bzw. bis zu 30 % des eingebrachten Kupfers nach Schnellfixierung (ca. 100 °C, 1 bis 2 h; Heißdampf) ausgewaschen.

Bei der Verwendung von Wein- oder Milchsäure als komplexbildende Säuren ist die Kupferfixierung im Holz zwar besser, die Eindringtiefe und Schutzmittelverteilung bei der Imprägnierung z.B. von Kiefernrundhölzern im Kesseldruckverfahren ist jedoch für einen ausreichenden Holzschutz nicht zufriedenstellend.

Die bekannten Komplexbildner, Amine und Säuren, können nach der Imprägnierung durch Wasser (Niederschläge, Bodenfeuchtigkeit) aus dem Holz ausgelaugt werden und in die Umwelt gelangen.

Außerdem besitzen die bekannten Amine einen meßbaren Dampfdruck. Die zulässigen Konzentrationen in der Atemluft betragen z.B. bei Ethanolamin, Diethylentriamin 6 $mg/m^3$, 4 $mg/m^3$.

Es wurde gefunden, daß diese Nachteile nicht auftreten, wenn wasserlösliche Holzschutzmittel auf der Basis von Mischungen von Bis-(N-Organodiazeniumdioxy)-Metallverbindungen mit komplexbildenden, polymeren Stickstoffverbindungen verwendet werden.

N-Organodlazeniumdloxy-Verblndungen sind z.B. die N-Cyclohexyl-, N-$C_4$-$C_{10}$-Alkyl-, insbesondere N-$C_5$-$C_8$-Alkyl-, N-Aryl-, insbesondere N-Phenyldiazeniumdloxy-Verbindungen und ihre Mischungen. Metallsalze sind z.B. die Kupfer-, Zink-, Nickel- oder Kobaltsalze und ihre Mischungen. Solche Verbindungen sind z.B. Bis-(N-Cyclohexyldiazeniumdioxy)-Kupfer und/oder -Zink und/oder -Nickel und/oder -Cobalt, Bls-(N-Alkyldiazeniumdioxy)-Kupfer und/oder -Zink und/oder -Nickel und/oder -Cobalt, Bls-(N-Aryldiazeniumdioxy)-Kupfer und/oder -Zink und/oder -Nickel und/oder -Cobalt.

Komplexbildende, polymere Stickstoffverbindungen sind z.B. Polyethylenimine, Polyamidoamine (Kondensationsprodukte von Polyaminen mit Adipinsäure), Kondensationsprodukte z.B. auf Basis Diethylentriamin/Triethanolamin und/oder Diethanolamin/Diethylentriamin. Kupfer- und Zinkverbindungen, Polyethylenimine und N-Cyclohexyldlazeniumdioxy-Verbindungen werden bevorzugt.

Polyethylenimine (PEI) sind bekannt und entstehen durch Polymerisation von 1,2-Ethylenimin. In ihnen liegt der Stickstoff primär (Endgruppe), sekundär und tertiär (Verzweigung) vor. Geeignet sind Polyethylenimine mit n größer als 10; sehr gute Ergebnisse wurden erzielt bei der Verwendung von PEI mit einem Polymerisationsgrad n zwischen 50 und 1000.

Polyamidoamine entstehen beispielsweise durch Umsetzung von Diethylentriamin mit Adipinsäure bei 150 bis 200 °C.

Weitere Kondensationsprodukte entstehen beispielsweise durch Erhitzen von Diethanolamin oder Triethanolamin auf 200 bis 220 °C in Gegenwart von phosphoriger Säure ($H_3PO_3$).

Das Eindringen wäßriger Lösungen der neuen Holzschutzmittel wird bei einer Imprägnierung z.B. im Kesseldruckverfahren nicht beeinträchtigt: Die Ausfällung der obengenannten Metallsalze bei Berührung mit dem Holz tritt nicht ein, die Lösungen dringen gut in das Holz ein und die Wirkstoffverteilung im Holz entspricht den Anforderungen der Praxis. Erst nach dem Imprägnieren beginnt die Ausfällung der unlöslichen Kupfer- und/oder Zink-Salze. Sie werden dadurch im Holz fixiert. Die Fixierungszeit ist abhängig von der Temperatur. Die Fixierung ist bei 20 °C beispielsweise nach 1 bis 2 Wochen abgeschlossen, durch Heißdampfbehandlung (Wasserdampf, 100 °C oder mehr) kann die Fixierungsreaktion erheblich beschleunigt werden, sie ist dann beispielsweise bereits nach 1 bis 2 Stunden beendet.

Die polymeren Stickstoffverbindungen besitzen praktisch keinen meßbaren Dampfdruck. Sie werden daher in der Atemluft fast nicht gefunden. Nach der Fixierung werden sie z.B. durch Witterungseinflüsse nicht aus dem Holz ausgewaschen.

Es können z.B. Bis-(N-Cyclohexyldiazeniumdioxy)-Kupfer und/oder -Zink (Cu-HDO/Zn-HDO) und/oder -Cobalt (Co-HDO) und/oder -Nickel (Ni-HDO), Bis-(N-Phenyldiazeniumdioxy)- bzw. Bis-(N-Tolyldiazeniumdioxy)-Kupfer und/oder -Zink und/oder -Cobalt und/oder -Nickel, Bis-(N($C_5$-$C_8$)-Alkyldiazeniumdioxy)-Kupfer und/oder -Zink und/oder -Cobalt und/oder -Nickel und ihre Mischungen verwendet werden.

Es können statt dessen auch die entsprechenden wasserlöslichen Alkali- und/oder Ammoniumsalze zusammen mit wasserlöslichen und/oder wasserunlöslichen Metallverbindungen wie z.B. Kupfer- und/oder Zinkacetat, Kupfer- und/oder Zinkborat, Kupfer- und/oder Zinkoxid, Kupfer- und/oder Zinkhydroxid, Zinkcarbonat, Kupferhydroxycarbonat und/oder die entsprechenden Nickel- und/oder Cobaltverbindungen verwendet werden.

Die Holzschutzmittel können gegebenenfalls weitere Verbindungen, z.B. eine Verbindung mit einem fungiziden Anion, beispielsweise eine Borverbindung, z.B. Alkaliborat, Aminborat, Borsäure; Fluoride, z.B. Kaliumfluorid; und/oder Salze der Fluoroborsäure und/oder Fluorophosphorsäure und/oder Difluorophosphorsäure enthalten.

Zur Verbesserung des Korrosionsverhaltens bzw. Stabilisierung und Abpufferung auf einen pH-Wert von ca. 8 bis 10 können z.B. aliphatische Carbonsäuren oder Polycarbonsäuren hinzugefügt werden. Als aliphatische Carbonsäuren können z.B. $C_5$-$C_{20}$-Monocarbonsäuren wie Hexansäure, Heptansäure, Octansäure, Nonansäure, Decansäure, 2-Ethylpentansäure, 2-Ethylhexansäure, 2-Ethylheptansäure, Isooctansäure, Isononansäure, Isodecansäure, Versaticsäuren (stark verzweigte Monocarbonsäuren), ($C_5$-$C_{20}$)-Dicarbonsäuren, z.B. Sebacinsäure, verwendet werden.

Amine, wie z.B. Aminoethylethanolamin, Dipropylentriamin, können zur Einstellung bestimmter pH-Werte beigegeben werden.

Durch Mischung mit Fettaminen (primär, sekundär, tertiär), die zumindest einen hydrophilen Rest mit wenigstens 6 C-Atomen enthalten, ist eine Verbesserung des Wirkungsspektrums gegen holzzerstörende und holzverfärbende Pilze sowie gegen holzzerstörende Insekten möglich.

Diese Amine entsprechen z.B. der allgemeinen Formel

a) 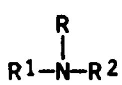 und b) 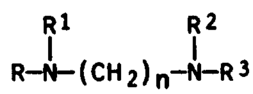

c) 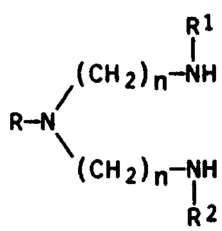 n = 1-20

mit

R = $C_6$-$C_{20}$-Alkyl und/oder Hydroxyalkyl

$R^1$, $R^2$, $R^3$ = unabhängig voneinander Hydrogen- oder Niederalkyl- oder R entsprechendem Alkyl- oder Hydroxyalkyl- oder gegebenenfalls Benzylrest.

Die Fettamine können entsprechend ihren Eigenschaften in Form ihrer Salze, z.B. ganz oder zum Teil als Salze von Carbonsäuren wie Essigsäure, Propionsäure, 2-Ethylhexansäure, gegebenenfalls unter Zusatz von Emulgatoren in die neuen Konzentrate oder Lösungen eingearbeitet werden.

Geeignete Fettamine sind z.B. Dimethyl-($C_{10}$-$C_{18}$)-alkylamin, insbesondere Dimethyl-$C_{12}$/$C_{14}$-alkylamin, Methyldioctylamin, Methyldldecylamin, Octyldiethanolamin, Didodecyl-1,3-Propylendiamin, $C_{13}$/$C_{15}$-Alkyltrimethylendiamin, Laurylpropylendlamin, N,N-Bis-(3-aminopropyl)-laurylamin.

Es können weiterhin quartäre Ammoniumverbindungen oder Phosphoniumverbindungen zugegeben werden.

Eine quaternäre Ammoniumverbindung ist z.B. eine Verbindung entsprechend der allgemeinen Formel $R^1R^2R^3R^4N^+Z^-$, wobei

$R^1$ einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch $C_1$- bis $C_{20}$-Alkyl oder Halogen substituiert ist,

$R^2$ $C_1$- bis $C_6$-Alkyl, $C_3$- bis $C_9$-Alkoxyalkyl, EO bzw. PO mit n = 1 bis 50,

$R^3$ $C_1$- bis $C_6$-Alkyl, $C_3$- bis $C_4$-Alkoxy, EO bzw. PO mit n = 2 bis 50,

$R^4$ $C_1$- bis $C_{20}$-Alkyl

bedeutet oder je zwei der Reste $R^1$ bis $R^4$ zusammen mit dem Stickstoffatom einen heterocyclischen Rest bilden, der 4 bis 5 C-Atome, 1 bis 2 H-Atome und eine, zwei oder drei Doppelbindungen enthält, wobei die Kohlenstoffatome gegebenenfalls durch $C_1$- bis $C_4$-Alkyl oder Halogen substituiert sind und Z einen Säurerest bedeutet.

Als wirksame Phosphoniumverbindungen eignen sich besonders Verbindungen der Formel

$R^1_3\ R^{2P+Y-}$ ,

in der

$R^1$ einen Alkylrest mit 1 bis 6 Kohlenstoffatomen, einen Hydroxyalkylrest mit 1 bis 6 Kohlenstoffatomen oder einen Phenylrest,

$R^2$ einen Alkylrest mit 8 bis 18 Kohlenstoffatomen und

Y einen Säurerest, insbesondere ein Halogenidanion,

bedeutet.

Die Reste $R^1$ und $R^2$ sind vorzugsweise geradkettig.

Die quartären Phosphoniumverbindungen können in den neuen Konzentraten einzeln oder als Gemische vorhanden sein. Beispiele für derartige Phosphoniumverbindungen sind Trimethyl-n-dodecylphosphonlumchlorid, Triethyl-n-decylphosphonlumbromid, Tri-n-propyl-n-tetradecylphosphoniumchlorid, Trimethylol-n-hexadecyl-phosphoniumchlorid, Tri-n-butyl-n-tetradecylphosphoniumchlorid, Tri-n-butyl-n-dodecylphosphoniumbromid, Tri-n-butyl-n-decylphosphoniumchlorid, Tri-n-butyl-n-hexadecylphosphoniumbromid, Tri-n-hexyl-n-decylphosphoniumchlorid, Triphenyl-n-dodecylphosphoniumchlorid, Triphenyl-n-tetradecylphosphoniumbromid, Triphenyl-n-octadecylphosphoniumchlorid.

Auch ein Zusatz weiterer Fungizide, z.B. in emulgierter Form, wie
N-Tridecyl-2,6-dimethylmorpholin (Tridemorph) und/oder
4-(3-para-tertiär-butylphenyl)-2-methyl-propyl-2,6-cis-dimethylmorpholin (Fenpropimorph) und/oder
Triazol- und/oder Imidazolverbindungen wie
1-(2-(2,4-Dichlorphenyl)-4-methyl-1-3-dioxolan-2-ylmethyl)-1H-1,2,4-triazol
1-(2-(2,4-Dichlorphenyl)-1,3-dioxolan-2-ylmethyl)-1H-1,2,4-triazol
1-(2-(2,4-Dichlorphenyl)-4-ethyl-1,3-dioxolan-2-ylmethyl)-1H-1,2,4-triazol
1-(2-(2,4-Dichlorphenyl)-4-propyl-1,3-dioxolan-2-ylmethyl)-1H-1,2,4-triazol (Propiconazol)
1-(2-(2,4-Dichlorphenyl)-4-pentyl-1,3-dioxolan-2-ylmethyl)-1H-1,2,4-triazol
1-(2-(2,4-Dichlorphenyl)-4-ethyl-1,3-dioxolan-2-ylmethyl)-1H-imidazol
α-tert-Butyl-α(p-Chlorphenylethyl)-1H-1,2,4-triazol-1-ethanol
1-(β-Alkyloxy-2,4-dichlorphenethyl)imidazol und/oder
Organozinnverbindungen, besonders Tributylzinn(TBT)verbindungen wie z.B. TBT-oxid, TBT-versatoat, TBT-benzoat, TBT-naphthenat, TBT-HDO und/oder
Isothiazolinonverbindungen der folgenden Formel

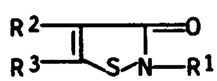

$R^1$ = Wasserstoff, ein Alkyl-, Alkenyl-, Alkynylrest mit 1 bis 18 Kohlenstoffatomen, Cycloalkylrest mit einem $C_3$- bis $C_6$-Ring mit bis zu 12 Kohlenstoffatomen, einem Aralkyl- oder Arylrest mit bis zu 19 Kohlenstoffatomen

$R^2$,$R^3$ = unabhängig voneinander Hydrogen-, Halogen- oder niedrigerem Alkylrest bzw. $R^2$ und $R^3$ Teil eines Aromatenrestes

ist möglich.

Als Emulgatoren, gegebenenfalls unter Zusatz polarer Lösungsmittel, können vor allem die vorgenannten Fettamine und ihre Salze, quartäre Ammonium-/Phosphoniumverbindungen und z.B. andere ionische und nichtionische Emulgatoren Verwendung finden.

Die wasserverdünnbaren Mittel enthalten - in konzentrierter Form - das Kupfer und/oder Zink und/oder Cobalt und/oder Nickel, berechnet als Element, im allgemeinen z.B. in einer Menge von 1 bis 10 Gew.%. Geeignete Konzentrate enthalten beispielsweise:

2,5 bis 50 % Bis-(N-Cycloalkyldiazeniumdioxy)-Kupfer und/oder -Zink und/oder -Nickel und/oder -Cobalt und/oder Bis-(N-Alkyldiazeniumdioxy)-Kupfer und/oder -Zink und/oder -Nickel und/oder -Cobalt und/oder

Bis-(N-Aryldiazeniumdioxy)-Kupfer und/oder -Zink und/oder -Nickel und/oder -Cobalt
2,5 bis 50 % einer polymeren, komplexbildenden Stickstoffverbindung, insbesondere Polyethylenimin
0 bis 40 % Verbindungen mit einem fungizid wirkenden Anion
0 bis 20 % $C_6$-$C_{20}$-Carbonsäuren
0 bis 40 % eines Fettamins und/oder Fettaminsalzes oder ihrer Mischungen
0 bis 40 % einer quartären Ammoniumverbindung oder quartären Phosphoniumverbindung
0 bis 15 % Tridemorph, Fenpropimorph, Triazol- und/oder Imidazolderivate, Tributylzinnverbindungen und/oder Isothiazolinonverbindungen,
wobei die Summe jeweils 100 Gew.% ergibt, sowie gegebenenfalls untergeordnete Mengen an anderen Bestandteilen, wie Aminen, Ammoniak, Korrosionsinhibitoren und erforderlichenfalls Wasser und/oder polare wassermischbare Lösungsmittel, deren Anteile jedoch im allgemeinen gering gehalten werden können und die im wesentlichen der Handhabung dienen.

Die Erfindung erstreckt sich jedoch gleichermaßen auf die durch Verdünnung mit Wasser herstellbaren Imprägnierlösungen entsprechend geringerer Einzelkonzentration. Die Anwendungskonzentration beträgt z.B. 0,01 bis 0,50 Gew.% (Gew.%) Metall, z.B. Kupfer, in der wäßrigen Imprägnierlösung, je nach Art der Imprägnierung und des Gefährdungsgrades des zu imprägnierenden Holzes.

Durch Auflösen der Metallsalze, insbesondere der Kupfer- und/oder Zinkverbindungen, in den polymeren, komplexbildenden Stickstoffverbindungen, gegebenenfalls unter Wasserzusatz, entstehen hochkonzentrierte wasserlösliche Pasten und flüssige Konzentrate, die nach dem Verdünnen mit Wasser zum Imprägnieren von Holz verwendet werden können.

Die Anwendung der Imprägnierlösungen zum Schutz von Holz kann einerseits durch handwerkliche Verfahren, wie z.B. Sprühen, Streichen, Tauchen, Trogtranken, oder durch großtechnische Verfahren, wie z.B. Kesseldruckverfahren, Wechseldruckverfahren, Doppelvakuumverfahren, erfolgen. Unter "Holz" sind sowohl massives Holz als auch Holzwerkstoffe, z.B. Spanplatten, Sperrholz, zu verstehen.

Die Fixierung des Holzschutzmittels im Holz kann z.B. unter Normalbedingungen, z.B. bei 5 bis 35 °C beispielsweise in 1 bis 4 Wochen, erfolgen, andererseits aber durch spezielle Verfahren, z.B. mittels Heißdampfbehandlung (ca. 100 bis 150 °C) oder durch Hochfrequenz bewirkt werden.

Eine Fixierung in Trockenkammern, z.B. bei 50 bis 80 °C beispielsweise in 12 bis 24 Stunden, ist auch möglich.

Der pH-Wert der wäßrigen Imprägnierlösung liegt im allgemeinen zwischen 7,5 bis 10,0. Durch Zusatz von Säuren kann in der Lösung gegebenenfalls auch ein pH-wert unter 7,5 bis etwa 6,0 eingestellt werden.

Die Konzentrate oder Lösungen können durch wasserlösliche Farbstoffe oder Farbstoff- und/oder Pigmentformulierungen eingefärbt werden.

Die Menge der verwendeten polymeren, komplexbildenden Stickstoffverbindungen wird jeweils so bemessen, daß sie sowohl zur Komplexbildung der Metalle, insbesondere des Kupfers und/oder Zinks, ausreicht als auch die Eindringung der Imprägnierlösung in das Holz gewährleistet ist.

Die Erfindung wird an folgenden Beispielen erläutert:

Vergleichsbeispiel A (nicht erfindungsgemäß)

25,0 % Cu-HDO
22,5 % Diethylentriamin
12,5 % Nitrilotriessigsäure
40,0 % Wasser
Die Lösung wird mit Wasser im Verhältnis 2 Teile Lösung + 98 Teile Wasser verdünnt.
Anwendungskonzentration 2 % in Wasser.

Es wurden jeweils 20 Kiefernsplintholzklötzchen (15x25x50 mm) imprägniert und
I. nach 4 Wochen Fixierung bei Normaltemperatur (20 °C)
II. nach Heißdampfbehandlung (1 h, 100 °C) und 4 Stunden Abkühlzeit
mehrmals mit Wasser ausgewaschen, das Waschwasser gesammelt und der Kupfergehalt bestimmt. Die Menge des ausgewaschenen Kupfers wurde auf die Gesamtmenge des Kupfers im Holz vor der Auswaschung bezogen. Keine Auswaschung = 0 %, vollständige Auswaschung = 100 %.

Auswaschung:

I. 15,5 % Kupfer
II. 25,1 % Kupfer

Vergleichsbeispiel B (nicht erfindungsgemäß)

13,5 % K-HDO
6,25 % Nitrilotriessigsäure
6,25 % Borsäure
6,25 % Diethylentriamin
5,0 % Ethanolamin
4,0 % $Cu(OH)_2 \cdot CuCO_3$
58,75 % Wasser
(entsprechend 12,5 % Cu-HDO)
Anwendungskonzentration 4 %

Auswaschung:

I. 17,8 % Kupfer
II. 28,5 % Kupfer

Vergleichsbeispiel C (nicht erfindungsgemäß)

25,0 % Cu-HDO
17,5 % Diethylentriamin
5,0 % Ethanolamin
12,5 % Weinsäure
12,5 % Borsäure
27,5 % Wasser
Anwendungskonzentration 2 %

Auswaschung:

I. 6,5 % Kupfer

Für die Bestimmung der Eindringtiefe wurden Kiefernpalisaden (Länge 1,20 m, Durchmesser 20 bis 24 cm, Hirnflächen durch Anstrich abgedichtet, Splintbreite mehr als 30 mm) Im Kesseldruckverfahren (1 Stunde Vakuum, 2 Stunden Druck) imprägniert. Für die Bestimmung der Eindringtiefe des Kupfers wurden die imprägnierten Hölzer in der Mitte aufgeschnitten, die Schnittflächen mit 4-(Pyridyl-(2)-azo)-Resorcinmononatriumsalz(monohydrat) behandelt (Rotfärbung mit Kupfer) und die Eindringtiefe des Kupfers wurde gemessen. Pro Versuch wurden im allgemeinen 3 Palisaden imprägniert.

Folgende mittlere Eindringtiefen wurden ermittelt:

| | | | |
|---|---|---|---|
| Cu-Eindringung: | 10,5 mm | 12,0 mm | 9,8 mm |
| mittlere Splintbreite: | 37,2 mm | 35,1 mm | 40,0 mm |

Vergleichsbeispiel D (nicht erfindungsgemäß)

25,0 % Bis-(N-Phenyldiazeniumdioxy)-Kupfer
30,0 % Dipropylentriamin
12,5 % Nitrilotriessigsäure
12,5 % Borsäure
20,0 % Wasser
Anwendungskonzentration 2 %

Auswaschung:

I. 12,5 % Kupfer
II. 24,1 % Kupfer

Beispiele (erfindungsgemäß)

Beispiel 1

25 % Cu-HDO
19 % PEI n ca. 100
56 % Wasser
Anwendungskonzentration: 2,0 %

Kupferauswaschung:

I. 4,2 % Kupfer
II. 5,1 % Kupfer

Kupfereindringung bei Kesseldruckverfahren:

Kiefernpalisaden (1 Stunde Vakuum, 2 Stunden Druck)

| | | |
|---|---|---|
| 35,2 mm | 38,5 mm | 32,1 mm |

Die Kupfereindringung stimmt mit der Splintbreite überein und erreicht die Kerngrenze.

Beispiel 2

25 % Bis-(N-Phenyldiazeniumdioxy)-Kupfer
19 % PEI n ca. 500
56 % Wasser
Anwendungskonzentration: 2,0 %

Kupferauswaschung:

I. 3,3 % Kupfer
II. 4,5 % Kupfer

Kupfereindringung bei Kesseldruckverfahren:

| | | |
|---|---|---|
| 30,5 mm | 36,2 mm | 32,5 mm |

Die Kupfereindringung stimmt mit der Splintbreite überein und erreicht die Kerngrenze.

Beispiel 3

25 % Bis-($C_5$-$C_7$-Alkyldlazeniumdioxy)-Kupfer
20 % PEI n ca. 500
55 % Wasser

Kupferauswaschung:

I. 5,5 % Kupfer

Kupfereindringung bei Kesseldruckverfahren (Palisaden-Länge 80 cm, Durchmesser 18 cm): 30,7 mm.
Die Kupfereindringung stimmt mit der Splintbreite überein und erreicht die Kerngrenze.

Beispiel 4

13,5 % K-HDO
7,5 % 2-Ethylhexansäure
10,0 % PEI n ca. 100
65,0 % Wasser
4,0 % $Cu(OH)_2 CuCO_3$
(≙ 12,5 % Cu-HDO)
Anwendungskonzentration: 4 %

Kupferauswaschung:

I. 3,6 % Kupfer
II. 4,5 % Kupfer

Kupfereindringung bei Kesseldruckverfahren:

| | | |
|---|---|---|
| 35,5 mm | 32,0 mm | 40,1 mm |

Die Kupfereindringung stimmt mit der Splintbreite überein und erreicht die Kerngrenze.

Beispiel 5

13,5 % K-HDO
6,25 % 2-Ethylhexansäure
6,25 % Borsäure
11,25 % PEI n ca. 50
4,0 % $Cu(OH)_2 CuCO_3$
58,75 % Wasser
(≙ 12,5 % Cu-HDO)
Anwendungskonzentration: 4 %

Kupferauswaschung:

I. 6,1 % Kupfer
II. 5,9 % Kupfer

Kupfereindringung bei Kesseldruckverfahren:

| | | |
|---|---|---|
| 31,1 mm | 37,8 mm | 35,0 mm |

Die Kupfereindringung stimmt mit der Splintbreite überein und erreicht die Kerngrenze.

Beispiel 6

13,5 % K-HDO
5,0 % 2-Ethylhexansäure
11,0 % PEI n ca. 100
4,7 % Kupferborat
65,8 % Wasser
Anwendungskonzentration: 4 %

Kupferauswaschung:

I. 3,5 % Kupfer
II. 4,0 % Kupfer

Kupfereindringung bei Kesseldruckverfahren:

| | | |
|---|---|---|
| 38,5 mm | 44,5 mm | 31,7 mm |

Die Kupfereindringung stimmt mit der Splintbreite überein und erreicht die Kerngrenze.

Beispiel 7

13,5 % K-HDO
5,0 % 2-Ethylhexansäure
5,0 % Fluorophosphorsäure
12,5 % PEI n ca. 500
4,0 % $Cu(OH)_2CuCO_3$
60,0 % Wasser
Anwendungskonzentration: 4 %

Kupferauswaschung:

I. 4,3 % Kupfer
II. 3,8 % Kupfer
Kupfereindringung bei Kesseldruckverfahren (Palisaden-Länge 80 cm, Durchmesser 18,5 cm): 29,7 mm
Die Kupfereindringung stimmt mit der Splintbreite überein und erreicht die Kerngrenze.

Beispiel 8

13,5 % K-HDO
6,25 % 2-Ethylhexansäure
6,25 % Borsäure
9,5 % PEI n ca. 100
3,00 % Dipropylentriamin
4,00 % $Cu(OH)_2CuCO_3$
57,50 % Wasser
(≙ 12,5 % Cu-HDO)
Anwendungskonzentration: 4 %

Kupferauswaschung:

I. 5,0 % Kupfer
II. 5,0 % Kupfer

Kupfereindringung bei Kesseldruckverfahren:

| | | |
|---|---|---|
| 32,5 mm | 40,7 mm | 37,5 mm |

Die Kupfereindringung stimmt mit der Splintbreite überein und erreicht die Kerngrenze.

Beispiel 9

13,5 % K-HDO
6,25 % 2-Ethylhexansäure
6,25 % Borsäure
8,5 % PEI n ca. 100
5,0 % Polyamidoamin
4,0 % $Cu(OH)_2CuCO_3$
56,5 % Wasser Anwendungskonzentration: 4 %

Kupferauswaschung:

I. 4,8 % Kupfer
II. 5,6 % Kupfer

Kupfereindringung bei Kesseldruckverfahren (Palisaden-Länge 80 cm, Durchmesser 18,5 cm): 28,7 mm
Die Kupfereindringung stimmt mit der Splintbreite überein und erreicht die Kerngrenze.

Beispiel 10

18,25 % Kondensationsprodukt aus Triethanolamin/Diethylentriamin Verhältnis 1:1
13,50 % K-HDO
6,25 % Borsäure
4,00 % $Cu(OH)_2CuCO_3$
58,00 % Wasser
(≙ 12,5 % Cu-HDO)
Anwendungskonzentration 4 %

Kupferauswaschung:

I. 6,7 % Kupfer
II. 5,9 % Kupfer

Beispiel 11

13,5 % K-HDO
18,0 % 2-Ethylhexansäure
10,5 % Dimethylalkylamin ($C_{12}$-$C_{14}$)
9,5 % N,N-Bis-(3-aminopropyl)-laurylamin
10,0 % PEI n ca. 100
4,0 % $Cu(OH)_2CuCO_3$
34,5 % Wasser
(≙ 12,5 % Cu-HDO)
Anwendungskonzentration 2,5 %

Kupferauswaschung:

I. 5,5 % Kupfer
II. 6,0 % Kupfer

Beispiel 12

8,4 % K-HDO
10,0 % 2-Ethylhexansäure
6,7 % PEI n ca. 100
2,7 % $Cu(OH)_2CuCO_3$
10,0 % Dimethylalkylamin ($C_{12}$-$C_{14}$)
6,7 % Tridemorph
10,0 % ethoxyliertes Cocosfettamin (Dichte 0,96 g/cm$^3$ bei 50 °C)

Anwendungskonzentration 4 %

Kupferauswaschung:

I. 2,5 % Kupfer
II. 2,6 % Kupfer

Beispiel 13

8,4 % K-HDO
10,0 % 2-Ethylhexansäure
6,7 % PEI n ca. 100
2,7 % $Cu(OH)_2CuCO_3$
10,0 % Dimethylalkylamin ($C_{12}$-$C_{14}$)
6,7 % Fenpropimorph
10,0 % ethoxyliertes Cocosfettamin (Dichte 0,96 g/$cm^3$ bei 50 °C)
3,5 % ethoxyliertes Nonylphenol EO ca. 10
2,0 % Wasser
Anwendungskonzentration 4 %

Kupferauswaschung:

I. 1,5 % Kupfer
II. 2,0 % Kupfer

Beispiel 14

8,4 % K-HDO
5,0 % 2-Ethylhexansäure
6,7 % PEI n ca. 100
2,7 % $Cu(OH)_2CuCO_3$
16,7 % N-Benzyl-N-($C_{12}$-$C_{14}$)alkyl-N,N-dimethylammoniumchlorid
60,5 % Wasser
Anwendungskonzentration 4 %

Kupferauswaschung:

I. 2,5 % Kupfer
II. 2,7 % Kupfer

Beispiel 15

13,5 % K-HDO
9,0 % PEI n ca. 100
5,0 % 2-Ethylhexansäure
4,0 % $Cu(OH)_2CuCO_3$
5,0 % Propiconazol
12,5 % ethoxyliertes Nonylphenol ED ca. 15
2,5 % Propylenglykol
62,0 % Wasser
Anwendungskonzentration 4 %

Kupferauswaschung:

I. 3,5 % Kupfer
II. 4,9 % Kupfer

## Patentansprüche

1. Holzschutzmittel, enthaltend ein Metallsalz einer N-Organyldiazeniumdioxy-Verbindung und ein komplexbildendes polymeres Amin.

2. Mittel nach Anspruch 1, enthaltend N-Cyclohexyldiazeniumdioxy-Kupfer.

3. Mittel nach Anspruch 1, enthaltend Polyethylenimin.

4. Verfahren zum Schutz von Holz, dadurch gekennzeichnet, daß man Holz mit einem Mittel gemäß Anspruch 1 behandelt.

5. Verfahren zum Schutz von Holz, dadurch gekennzeichnet, daß man Holz mit einer Mischung aus Wasser und einem Mittel gemäß Anspruch 1 behandelt.

6. Mittel gemäß Anspruch 1, enthaltend zusätzlich eine Bor- oder Fluor-Verbindung.

7. Verwendung eines Mittels gemäß Anspruch 1 zum Schutz von Holz.

8. Verwendung einer Mischung aus Wasser und einem Mittel gemäß Anspruch 1 zum Schutz von Holz.

9. Mischung aus Wasser und einem Mittel gemäß Anspruch 1.

## Claims

1. A wood preservative containing a metal suit of an N-organyldiazeniumdioxy compound and a complex-forming polymeric amine.

2. A preservative as claimed in claim 1, containing N-cyclohexyldiazeniumdioxycopper.

3. A preservative as claimed in claim 1, containing polyethyleneimine.

4. A process for preserving wood, wherein wood is treated with a preservative as claimed in claim 1.

5. A process for preserving wood, wherein wood is treated with a mixture of water and a preservative as claimed in claim 1.

6. A preservative as claimed in claim 1, additionally containing a boron or fluorine compound.

7. Use of a preservative as claimed in claim 1 for preserving wood.

8. Use of a mixture of water and a preservative as claimed in claim 1 for preserving wood.

9. A mixture of water and a preservative as claimed in claim 1.

## Revendications

1. Agent de protection du bois, contenant un sel métallique d'un N-organyldiazéniumdioxy-composé et une amine polymère formant des complexes.

2. Agent selon la revendication 1, contenant du N-cyclohexyldiazéniumdioxy-cuivre.

3. Agent selon la revendication 1, contenant de la polyéthylènimine.

4. Procédé de protection du bois, caractérisé par le fait que l'on traite le bois avec un agent selon la revendication 1.

**5.** Procédé de protection du bois, caractérisé par le fait que l'on traite le bois avec un mélange d'eau et d'un agent selon la revendication 1.

**6.** Agent selon la revendication 1, contenant, additionnellement, un composé de bore ou de fluor.

**7.** Utilisation d'un agent selon la revendication 1 pour la protection du bois.

**8.** Utilisation d'un mélange d'eau et d'un agent selon la revendication 1 pour la protection du bois.

**9.** Mélange d'eau et d'un agent selon la revendication 1.